(19)

Europäisches
Patentamt
European
Patent Office
Office européen
des brevets

(11)  **EP 1 619 840 B1**

(12)  **EUROPEAN PATENT SPECIFICATION**

(45) Date of publication and mention
of the grant of the patent:
**03.12.2008   Bulletin 2008/49**

(51) Int Cl.:
*H04L 12/56* (2006.01)      *H04L 1/00* (2006.01)

(21) Application number: **05015650.4**

(22) Date of filing: **19.07.2005**

(54) **Adaptive estimation method of multimedia data transmission rate**

Angepaßtes Schätzungsverfahren für die Multimediadatenübertragungsrate

Procédé d'estimation adaptative du taux de transmission de données multimedia

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **23.07.2004   KR 2004057737**

(43) Date of publication of application:
**25.01.2006   Bulletin 2006/04**

(73) Proprietor: **LG Electronics, Inc.
Seoul (KR)**

(72) Inventor: **Kwang-Deok, Seo, Comp. & Inf.
communications
Heungeop-Myeon
Wonju
Gangwon-Do (KR)**

(74) Representative: **Katérle, Axel et al
Wuesthoff & Wuesthoff
Patent- und Rechtsanwälte
Schweigerstraße 2
81541 München (DE)**

(56) References cited:
EP-A- 1 202 487          WO-A-20/04040928
US-A1- 2002 004 841          US-A1- 2003 103 243

• SISALEM D ET AL: "The Loss-Delay Adjustment
Algorithm: A TCP-friendly Adaptation Scheme"
INTERNET CITATION, 8 July 1998 (1998-07-08),
XP002226884

**Description**

**BACKGROUND OF THE INVENTION**

1. Field of the Invention

The present invention relates to a multimedia data transmission system based upon a real-time transport protocol (RTP)/real-time transport control protocol (RTCP) in a wired IP (internet protocol), and particularly, to a method for adaptively estimating a transmission rate of multimedia data by using a function of monitoring an RTCP network state.

2. Description of the Related Art

In general, conditions such as a sufficient bandwidth, a small delay and a small packet loss and the like should be ensured to transmit multimedia data through a wired IP network such as the Internet. However, a network layer in a current wired IP network cannot provide a function suitable to meet quality of service (QoS) required for video transmission. Therefore, the QoS should be secured by a higher layer of the network layer. To this end, a real-time transport protocol (RTP) and a real-time transport control protocol (RTCP) operated on a transport layer have been proposed.

The RTP is an Internet protocol for real-time multimedia data such as the audio and video generated in real-time. Although the RTP itself does not ensure real-time transmission of data, by using the RTP, application programs for transmission/reception in real-time multimedia data transmission system can support streaming data. The RTP is commonly executed on a UDP (user datagram protocol). The RTCP is a protocol used to maintain the QoS (Quality of Service) of the RTP. The RTP is related only to the data transmission whereas the RTCP relates to monitoring of the data transmission and the transmitting of session-related information. RTP nodes send to one another, RTCP packets in order to analyze a network state and to periodically report whether the network is congested. By the use of the RTP and the RTCP, characteristics according to time limit in transmitting multimedia data may be considered and it is possible to cope with a loss generated in the network.

In a general multimedia data transmission system, a multimedia application program (application layer) detects the network state through the RTCP and controls an encoding rate of real-time multimedia data to be transmitted. The controlling of the encoding rate of the real-time multimedia data is made through transmission rate control, and a general method of estimating an effective transmission rate by using network state information by the RTCP uses the following equation 1.

$$R(t) = \frac{1.22 \times s}{RTT(t) \times \sqrt{p(t)}} \quad \text{(equation 1)}$$

The R(t) indicates an effective transmission rate, the p(t) indicates a packet loss ratio and is obtained by the RTCP transmitted from a receiving side. The RTT(t) indicates a round-trip delay time, and the s indicates a size of a packet.

When the Round-Trip delay Time (RTT(t)) and the packet loss ratio (P(t)) are given, a general effective transmission rate is estimated by the equation 1. Namely, in the general method for estimating the transmission rate by using the equation 1, when the packet size (s) is fixed, the estimated transmission rate is varied according to the Round-Trip delay Time (RTT(t)) and the packet loss ratio (P(t)).

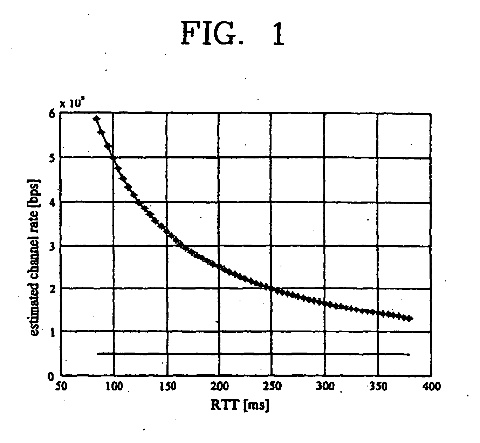

Figure 1 shows a change in an available transmission rate estimated by the equation 1 when the packet loss ratio (p(t)) and the packet size (s) are fixed and the Round-Trip delay Time (RTT(t)) is linearly changed. When the packet loss ratio is fixed such that p(t) ≡ 0.015 and s ≡ 625 and the Round-Trip delay Time (RTT(t)) is linearly increased from 80ms to 380ms, the minimum transmission rate of a user is 50kbps and the maximum transmission rate is 500kbps. As shown in Figure 1, as the Round-Trip delay Time (RTT(t)) is increased, the estimated available transmission rate is appropriately decreased.

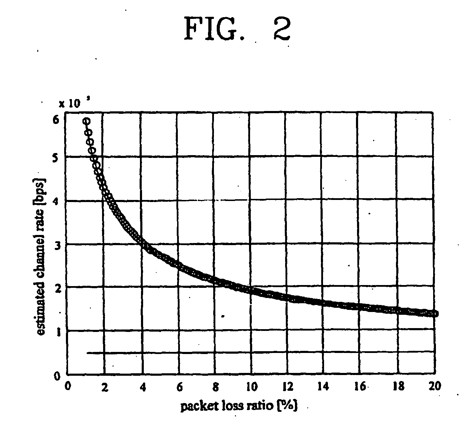

Figure 2 shows a change in an available transmission rate estimated by the equation 1 when the Round-Trip delay Time (RTT(t)) and the packet size (s) are fixed and the packet loss ratio (p(t)) is linearly changed. When the Round-Trip delay Time (RTT(t)) is fixed to 100ms and the packet size (s) is fixed to 625 and the packet loss ratio (p(t)) is changed from 0.1% to 20%, the minimum transmission rate of the user is 50kbps, and the maximum transmission rate is 500kbps.

As shown in Figure 2, in the general method for estimating an effective transmission rate by using the equation 1, it is not considered that a phenomenon such as time out occurs due to the large packet loss. Accordingly, when the packet loss ratio is small, the available transmission rate is estimated at an appropriate value. However, if the packet loss ratio is increased, the available transmission rate is overestimated. Namely, although the packet loss ratio is 10% which is considerably large, the available transmission rate is undesirably overestimated at about 200kbps by the general estimation method of the transmission rate.

Also, the general estimation method of the transmission rate is disadvantageous in that the network congestion cannot be quickly resolved and reception quality of multimedia data is degraded because the available transmission rate is overestimated when the packet loss ratio is large.

US 2002/004841 A1 discloses a method for adjusting the transmission rate of a multimedia data transmitting apparatus based on a data loss rate indicated in RTCP receiver report messages fed back from a receiver of the multimedia data. The transmission rate is initially set to a given initialisation value. Depending on the reported data loss rate, the transmission rate is increased, decreased or maintained. More specifically, if the reported data loss rate is lower than a first threshold value, the transmission rate is increased. If the data loss rate is larger than a second threshold value which is greater than the first threshold value, the transmission rate is decreased. Also, if the data loss rate is reported to lie between the first and second threshold values, the transmission rate remains unchanged.

D. Sisalem et al., in "The Loss-Delay Based Adjustment Algorithm: A TCP-friendly Adaptation Scheme", Proceedings of NOSSDAV, Cambridge, UK 1998, present a congestion control mechanism for RTP-based multimedia applications wherein a sender calculates, on each received RTCP packet from a receiver, a transmission rate with respect to the receiver in a recursive manner, distinguishing between a no-loss case and a case of losses being reported. In the no-loss case, the sender increases the transmission rate by an increment referred to as an additive increase rate (AIR) in this article. This additive increment is calculated based on the current transmission rate, a so-called bottleneck bandwidth indicative of the inter-packet spacing of two co-travelling packets due to a bottleneck along the transmission route, and a previous value of the increment. In the lossy case, the transmission rate is reduced proportional to the reported loss factor.

The mentioned article also refers to a TCP-throughput model estimating the throughput of a TCP connection from the maximum packet length, the round trip time of the connection and the average loss measured during the lifetime of the connection.

US 2003/103243 A1 discloses a method of adjusting a packet sending interval of a RTP-based communications apparatus so that the transmission rate approximates a target value.

Principles of RTCP reporting can be found, e.g., in WO 2004/040928 A1.

It is an object of the present invention to provide an adaptive estimation method for the transmission rate of multimedia data that can improve the estimation accuracy.

To achieve this object, the present invention provides a method according to claim 1.

Preferred embodiments are given in the dependent sub-claims.

The foregoing and other objects, features, aspects and advantages of the present invention will become more apparent from the following detailed description of the present invention when taken in conjunction with the accompanying drawings.

## BRIEF DESCRIPTION OF THE DRAWINGS

The accompanying drawings, which are included to provide a further understanding of the invention and are incorporated in and constitute a unit of this specification, illustrate embodiments of the invention and together with the description serve to explain the principles of the invention.

In the drawings:

Figure 1 is a view which illustrates a change in an available transmission rate estimated by a general estimation method when a packet loss ratio is fixed and a round-trip delay time is linearly changed;

Figure 2 is a view which illustrates a change in an available transmission rate estimated by a general estimation method when the round-trip delay time is fixed and the packet loss ratio is linearly changed;

Figure 3 is a view which illustrates configuration of a general real-time multimedia data transmission system using a RTP and a RTCP;

Figure 4 is a view which illustrates an adaptive estimation method of transmission rate of multimedia data in accordance with the present invention; and

Figure 5 is a view showing transmission rate values estimated by a calculation method that varies according to the magnitude of the packet loss ratio.

## DETAILED DESCRIPTION OF THE PREFERRED EMBODIMENTS

Reference will now be made in detail to the preferred embodiments of the present invention, examples of which are illustrated in the accompanying drawings.

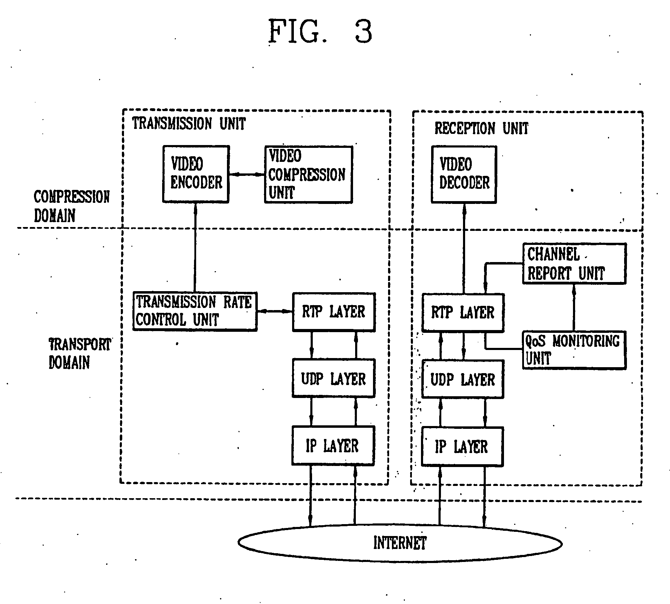

Figure 3 shows configuration of a general real-time multimedia data transmission system using a RTP and a RTCP.

As shown, a transmission unit and a reception unit of the general real-time multimedia data transmission system are divided into transport domains and compression domains (included in an application layer), respectively.

The compression domain of the transmission unit includes a video encoder which encodes multimedia data according to an estimated transmission rate; and a video compression unit which compresses the encoded multimedia data. The transport domain of the transmission unit includes a real-time transport protocol layer (RTP layer) controlling transport of multimedia data transported from the video compression unit, a UDP (user datagram protocol) layer and an IP (internet protocol) layer for transmitting to the reception unit, the multimedia data transported from the RTP layer, and a transmission rate control unit connected to the RTP layer, detecting a packet loss ratio from a RTCP receiver report (RR) packet transmitted from the reception unit, measuring a Round-Trip delay Time (RTT) by using the RTCP RR packet, estimating a transmission rate by using the packet loss ratio and the round-trip delay time, and providing the estimated transmission rate to the video encoder.

The transport domain of the reception unit includes an IP layer and a UDP layer, a RTP layer controlling transport of multimedia data transmitted from the UDP layer, a service quality monitoring unit monitoring QoS (Quality of Service) of multimedia data through information included in a header of a RTP packet of the RTP layer, and a channel report unit for reporting to the transmission unit on channel information based on the monitored QoS. The channel report unit transmits the channel information to the transmission unit through a RTCP RR packet.

The RTCP RR packet includes a reception report block for feeding back to the transmission unit, the statistical information of RTP packets transmitted from the transmission unit. The reception report block further includes a packet loss ratio and a LSR (last SR timestamp). The LSR indicates a transmission time of the last RTCP sender report (SR) packet.

The compression layer of the reception unit includes a video decoder which decodes multimedia data transmitted from the RTP layer.

The multimedia data packet transmitted by the transmission unit of the general multimedia data transmission system having such configuration may be lost on the Internet or may be abandoned by the reception unit due to excessive time delay. Other packets arriving in the reception unit on time are transmitted to the vide decoder through the IP/UDP/RTP layers and then decoded.

The reception unit receives the multimedia data packet and then calculates information on a network state such as a packet loss ratio, a delay or the like through various information existing in a RTP header of the multimedia data packet, thereby monitoring QoS (Quality of Service). The monitored information is fed back to the transmission unit through a real-time transport control protocol (RTCP) of the channel report unit. The transmission unit predicts an available bandwidth of a current channel by using the information which has been fed back, and the predicted available bandwidth, namely, the available transmission rate, is transmitted to the video encoder. The video encoder having received the predicted available transmission rate controls an output encoding rate of a multimedia data bit stream corresponding to the predicted transmission rate.

The present invention proposes a new estimation method of a transmission rate in which the transmission rate is estimated through information included in a RR packet when a transmission unit receives a RTCP RR packet from a reception unit in the multimedia data transmission system, while the method is not against a basic concept of a TCP (transmission control protocol)-friendly transmission-rate estimation.

In the multimedia data transmission system to which the present invention is applied, one RTCP packet is transmitted every time a predetermined number of multimedia data packets of a RTP packet format are transmitted, and the predetermined number may be 20 as one example.

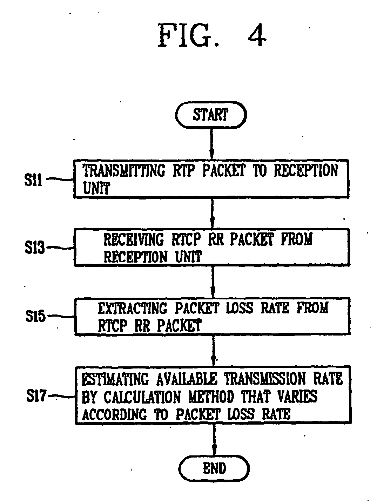

Figure 4 shows an adaptive estimation method of a transmission rate of multimedia data.

In the multimedia data transmission system, the transmission unit transmits multimedia data in RTP packet format to the reception unit (S11). Here, one RTCP packet is transmitted every time a predetermined number of RTP packets, for example, 20 RTP packets, are transmitted. Thus, the transmission unit transmits to the reception unit, one RTCP SR packet every time it transmits 20 RTP packets. The RTCP SR packet includes information related to a transmission time of the SR packet, namely, a value of a NTP(network time protocol) time stamp at the time of SR packet transmission.

When receiving the RTCP SR packet, the reception unit obtains a transmission time of the SR packet based on the NTP time stamp value of the RTCP SR packet, records the obtained transmission time of the SR packet on a LSR field to generate a RTCP RR packet and transmits the generated RTCP RR packet to the transmission unit (S13). The RTCP RR packet includes a packet loss ratio.

The transmission unit having received the RTCP RR packet detects a packet loss ratio from the RTCP RR packet (S15) and estimates an available transmission rate ($R(t_n)$) by a calculation method that varies according to the detected packet loss ratio as shown in the following equation A.

$$R(t_n) = \begin{cases} R_1(p(t_n)) = \dfrac{1.22 \times s}{RTT(t_n) \times \sqrt{p(t_n)}} & (p(t_n) \le 0.05) \\[2ex] R_2(p(t_n)) = \dfrac{s \times 20 \times (1 - \alpha \times p(t_n))}{LSR(t_n) - LSR(t_{n-1})} + \beta & (0.05 < p(t_n) < 0.1) \\[2ex] R_3(p(t_n)) = MinimumRate \ (ex.\,50\,kbps) & (p(t_n) \ge 0.1) \end{cases} \qquad \text{(equation A)}$$

Namely, the transmission unit estimates an available transmission rate ($R_1(t_n)$) when the detected packet loss ratio does not exceed 5% ($p(t_n) \le 0.05$), the transmission unit estimates an available transmission rate ($R_2(t_n)$) when the packet loss ratio is greater than 5% and smaller than 10% ($0.05 < p(t_n) < 0.1$), and the transmission unit estimates an available transmission rate ($R_3(t_n)$) when the packet loss ratio is not smaller than 10% ($p(t_n) \ge 0.1$).

In other words, when the detected packet loss ratio does not exceed 5% ($p(t_n) \le 0.05$), the transmission unit estimates the available transmission rate ($R_1(t_n)$) by the general estimation method using the equation 1.

When the detected packet loss ratio is greater than 5% and smaller than 10% ($0.05 < p(t_n) < 0.1$), the transmission rate divides the size of total data normally arriving in the reception unit, of 20 RTP packets by a time required to transmit the 20 packets, thereby estimating the available transmission rate ($R_2(t_n)$).

The time required to transmit the 20 RTP packets is calculated by using a LSR value included in the RTCP RR packet. Namely, the transmission unit subtracts a LSR value ($LSR(t_{n-1})$) of a previously-received RTCP RR packet from a LSR value ($LSR(t_n)$) of the currently-received RTCP RR packet, thereby obtaining the time required to transmit the 20 RTP packets. Namely, the transmission unit obtains a transmission time of the $n^{th}$-transmitted SR packet ($SR(t_n)$) by the LSR value ($LSR(t_n)$) of the $n^{th}$-fed back RR packet ($RR(t_n)$) and subtracts a transmission time of the n-$1^{th}$ SR packet ($SR(t_{n-1})$) from the transmission time of the $n^{th}$ SR packet ($SR(t_n)$), thereby obtaining a time required to transmit the 20 RTP packets ($LSR(t_n)-LSR(t_{n-1})$).

Also, the size of total data having normally arrived in the reception unit is calculated as follows. The transmission unit checks the number of RTP packets having been normally transmitted between the transmission time of the n-$1^{th}$ SR packet ($SR(t_{n-1})$) and the transmission time of the $n^{th}$ SR packet ($SR(t_n)$), and calculates the size of the normally-arriving data by using the checked number of the normally-transmitted RTP packets. The number of RTP packets having normally transmitted during an interval between the n-$1^{th}$ SR packet ($SR(t_{n-1})$) and the $n^{th}$ SR packet ($SR(t_n)$) is $s \cdot 20 \cdot (1-p(t_n))$. The $p(t_n)$ indicates a packet loss ratio detected from the $n^{th}$ RTCP RR packet, and the s indicates the packet size.

The a and $\beta$ are weighting factors given to allow transmission rates estimated by different equations to have continuous values without great differences therebetween when the packet loss ratios are 5% and 10%. The $\alpha$ and $\beta$ may be calculated by using the three expressions in equation A when the packet loss ratio of the RTCP RR packet transmitted from the reception unit is 5% and the packet loss ratio of the RTCP RR packet is 10%.

Here, if a time required to send the data is constant, the equation for estimating the available transmission rate ($R_2(t_n)$) is defined as a linear expression with respect to the packet loss ratio p.

If the packet loss ratio detected in the step S15 is not smaller than 10% ($p(t_n) \ge 0.1$), the transmission unit estimates the available transmission rate ($R_3(t_n)$) at a minimum transmission rate set by a user.

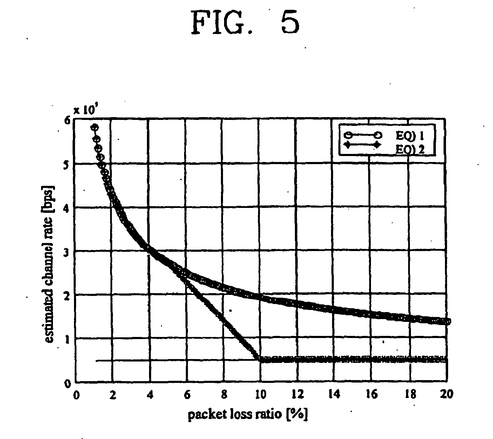

Figure 5 shows transmission rates estimated by a calculation method that varies corresponding to the magnitude of the packet loss ratio in accordance with the present invention.

Particularly, in Figure 5, shown are available transmission rates estimated corresponding to an increase in packet loss ratio p when $s \equiv 625$, $RTT \equiv 100ms$, and $LSR(t_n) - LSR(t_{n-1}) \equiv RTT/2 * 20$. Here, a=44, $\beta$=395600.

As shown in Figure 5, the available transmission rate estimated by the equation A is the same as a resulting value of the equation 1 (a resulting value obtained by the general estimation method of a transmission rate) when the packet loss ratio does not exceed 5%. When the packet loss ratio is greater than 5% and smaller than 10%, the available transmission rate estimated by the equation A is lower than the resulting value of the equation 1, and when the packet loss ratio is not smaller than 10%, the estimated available transmission rate is the minimum transmission rate input by the user.

Accordingly, in the estimation method of the transmission rate in accordance with the present invention, when the packet loss ratio is large, the available transmission rate is estimated at a value smaller than an estimated value obtained by the general estimation method of the transmission rate.

As described so far, in the present invention, a packet loss ratio is detected from a RTCP RR packet transmitted from a reception unit and an estimation method of an available transmission rate is adaptively selected according to a range within which the detected packet rate falls into, so that the available transmission rate is estimated at a smaller value when the packet loss is large. Accordingly, the network congestion can be quickly resolved and reception quality of multimedia data due to the packet loss can be improved.

**Claims**

1. An adaptive estimation method of multimedia data transmission rate comprising the steps of :

   receiving (S13) a real-time transport control protocol (RTCP) receiver report packet from a multimedia data reception unit;
   detecting (S15) a packet loss ratio from the RTCP receiver report packet; and
   adaptively estimating (S17) an available transmission rate according to a range within which the packet loss ratio falls;

   wherein the estimating step (S17) comprises:

   estimating the available transmission rate by a first equation when the packet loss ratio falls into a first range;
   estimating the available transmission rate by a second equation when the packet loss ratio falls into a second range; and
   estimating the available transmission rate by a third equation when the packet loss ratio falls into a third range;

   wherein the first equation comprises:

   $$R_1(p(t_n)) = \frac{1.22 \times s}{RTT(t_n) \times \sqrt{p(t_n)}}$$

   s: packet size
   $RTT(t_n)$ : Round-Trip delay Time
   $(t_n)$ : packet loss ratio detected from $n^{th}$ RTCP receiver report (RR) packet
   $R_1$ (.): available transmission rate in the first range
   wherein the second equation comprises:

   $$R_2(p(t_n)) = \frac{s \times 20 \times (1 - \alpha \times p(t_n))}{LSR(t_n) - LSR(t_{n-1})} + \beta$$

   s: packet size
   $(t_n)$ : packet loss ratio detected from $n^{th}$ RTCP receiver report (RR) packet
   $LSR(t_n)$: transmission time of $n^{th}$ RTCP sender report (SR) packet
   $\alpha, \beta$: weight factor
   $R_2$ (.) : available transmission rate in the second range
   wherein the third equation comprises a minimum transmission rate set by a user.

2. The method of claim 1, wherein the first range is a range of 5% or less, the second range is a range between 5% and 10%, and the third range is a range of 10% or more.

3. The method of claim 1, or 2 wherein one RTCP sender report packet is transmitted and one RTCP receiver report packet is received every time a predetermined number of RTP packets are transmitted.

4. The method of claim 3, wherein the predetermined number is 20.

5. The method of claim 3 or 4, wherein the RTCP receiver report packet comprises:

   a reception report block for feeding back to a multimedia data transmission unit, statistical information of RTP packets transmitted from the multimedia data transmission unit,

   wherein the reception report block includes a packet loss ratio and a transmission time of the last RTCP sender report packet.

**Patentansprüche**

1. Verfahren zur adaptiven Schätzung einer Multimediadatenübertragungsrate, umfassend die Schritte:

   - Empfangen (S13) eines einem Echtzeit-Transportsteuerprotokoll (RTCP) gemäßen Empfängerberichtspaket von einer Multimediadatenempfangseinheit,
   - Erfassen (S15) eines Paketverlustverhältnisses aus dem RTCP-Empfängerberichtspaket und
   - adaptives Schätzen (S17) einer verfügbaren Übertragungsrate nach Maßgabe eines Bereichs, in den das Paketverlustverhältnis fällt,

   wobei der Schätzschritt (S17) umfasst:

   - Schätzen der verfügbaren Übertragungsrate mittels einer ersten Gleichung, wenn das Paketverlustverhältnis in einen ersten Bereich fällt,
   - Schätzen der verfügbaren Übertragungsrate mittels einer zweiten Gleichung, wenn das Paketverlustverhältnis in einen zweiten Bereich fällt, und
   - Schätzen der verfügbaren Übertragungsrate mittels einer dritten Gleichung, wenn das Paketverlustverhältnis in einen dritten Bereich fällt,

   wobei die erste Gleichung umfasst:

$$R_1\left(p\left(t_n\right)\right) = \frac{1,22 \; x \; s}{RTT\;(t_n)\;x\;\sqrt{p(t_n)}}$$

   s: Paketgröße
   RTT($t_n$): Umlaufverzögerungszeit
   p($t_n$): aus dem n-ten RTCP-Empfängerberichts- (RR) Paket entnommenes Paketverlustverhältnis
   $R_1$(.): verfügbare Übertragungsrate im ersten Bereich
   wobei die zweite Gleichung umfasst:

$$R_2\left(p\left(t_n\right)\right) = \frac{s \; x \; 20 \; x \; (1 - \alpha \; x \; p(t_n))}{LSR\;(t_n) - LSR\;(t_{n-1})} + \beta$$

   s: Paketgröße
   p($t_n$): aus dem n-ten RTCP-Empfängerberichts- (RR) Paket entnommenes Paketverlustverhältnis
   LSR ($t_n$): Übertragungszeit des n-ten RTCP-Senderberichts- (SR) Pakets $\alpha$, $\beta$: Wichtungsfaktor
   $R_2$ (.): verfügbare Übertragungsrate im zweiten Bereich
   wobei die dritte Gleichung eine vom Benutzer festgelegte minimale Übertragungsrate umfasst.

2. Verfahren nach Anspruch 1, wobei der erste Bereich ein Bereich von 5% oder weniger ist, der zweite Bereich ein Bereich zwischen 5% und 10% ist und der dritte Bereich ein Bereich von 10% oder darüber ist.

3. Verfahren nach Anspruch 1 oder 2, wobei nach jeder Übertragung einer vorbestimmten Anzahl von RTP-Paketen ein RTCP-Senderberichtspaket übermittelt wird und ein RTCP-Empfängerberichtspaket empfangen wird.

4. Verfahren nach Anspruch 3, wobei die vorbestimmte Anzahl 20 ist.

5. Verfahren nach Anspruch 3 oder 4, wobei das RTCP-Empfängerberichtspaket einen Empfangsberichtsblock enthält, um statistische Informationen über RTP-Pakete, die von einer Multimediadatenübertragungseinheit übermittelt werden, an die Multimediadatenübertragungseinheit zurückzumelden, wobei der Empfangsberichtsblock ein Paketverlustverhältnis sowie die Übertragungszeit des letzten RTCP-Senderberichtspakets enthält.

**Revendications**

1. Procédé d'estimation adaptatif d'une vitesse de transmission de données multimédia comprenant les étapes consistant à :

   recevoir (S13) un paquet de rapport du récepteur de protocole de contrôle de transport en temps réel (RTCP) depuis une unité de réception de données multimédia ;
   détecter (S15) un rapport de perte de paquets depuis le paquet de rapport du récepteur RTCP ; et
   estimer de façon adaptative (S17) une vitesse de transmission disponible en fonction d'une plage dans laquelle se trouve le rapport de perte de paquets ;

   dans lequel l'étape d'estimation (S17) comprend :

   estimer la vitesse de transmission disponible au moyen d'une première équation lorsque le rapport de perte de paquets se trouve dans une première plage ;
   estimer la vitesse de transmission disponible au moyen d'une deuxième équation lorsque le rapport de perte de paquets se trouve dans une deuxième plage ; et
   estimer la vitesse de transmission disponible au moyen d'une troisième équation lorsque le rapport de perte de paquets se trouve dans une troisième plage ;

   dans lequel la première équation comprend :

$$R_1\big(p(t_n)\big) = \frac{1,22 \times s}{RTT(t_n) \times \sqrt{p(t_n)}}$$

   s : taille du paquet
   $RTT(t_n)$ : temps de propagation en boucle
   $p(t_n)$ : rapport de perte de paquets détecté depuis le $n^{\text{ième}}$ paquet de rapport du récepteur (RR) RTCP
   R1(.) : vitesse de transmission disponible dans la première plage
   dans lequel la deuxième équation comprend :

$$R_2\big(p(t_n)\big) = \frac{s \times 20x\big(1 - \alpha \times p(t_n)\big)}{LSR(t_n) - LSR(t_{n-1})} + \beta$$

   s : taille du paquet
   $p(t_n)$ : rapport de perte de paquets détecté depuis le $n^{\text{ième}}$ paquet de rapport du récepteur (RR) RTCP
   $LSR(t_n)$ : temps de transmission du $n^{\text{ième}}$ paquet de rapport de l'envoyeur (SR) RTCT
   $\alpha, \beta$ : facteur de pondération
   R2(.) : vitesse de transmission disponible dans la deuxième plage
   dans lequel la troisième équation comprend une vitesse de transmission minimum définie par un utilisateur.

2. Procédé selon la revendication 1, dans lequel la première plage est une plage de 5 % ou moins, la deuxième plage est une plage entre 5 % et 10 %, et la troisième plage est une plage de 10 % ou plus.

3. Procédé selon la revendication 1 ou 2, dans lequel un paquet de rapport de l'envoyeur RTCP est transmis et un paquet de rapport du récepteur RTCP est reçu à chaque fois qu'un nombre prédéterminé de paquets RTP est transmis.

4. Procédé selon la revendication 3, dans lequel le nombre prédéterminé est 20.

5. Procédé selon la revendication 3 ou 4, dans lequel le paquet de rapport du récepteur RTCP comprend :

   un bloc de rapport de réception pour une réintroduction vers une unité de transmission de données multimédia, des informations statistiques des paquets RTP transmis depuis l'unité de transmission de données multimédia,

dans lequel le bloc de rapport de réception comprend un rapport de perte de paquets et un temps de transmission du dernier paquet de rapport de l'envoyeur RTCP.

# FIG. 1

# FIG. 2

# FIG. 3

TRANSMISSION UNIT

RECEPTION UNIT

COMPRESSION DOMAIN

TRANSPORT DOMAIN

VIDEO ENCODER

VIDEO COMPRESSION UNIT

VIDEO DECODER

TRANSMISSION RATE CONTROL UNIT

RTP LAYER

RTP LAYER

CHANNEL REPORT UNIT

QoS MONITORING UNIT

UDP LAYER

UDP LAYER

IP LAYER

IP LAYER

INTERNET

EP 1 619 840 B1

# FIG. 4

```
        ┌─────────┐
        │  START  │
        └─────────┘
             │
             ▼
┌──────────────────────────────────┐
│ TRANSMITTING RTP PACKET TO        │
│ RECEPTION UNIT                    │
└──────────────────────────────────┘
             │
             ▼
┌──────────────────────────────────┐
│ RECEIVING RTCP RR PACKET FROM     │
│ RECEPTION UNIT                    │
└──────────────────────────────────┘
             │
             ▼
┌──────────────────────────────────┐
│ EXTRACTING PACKET LOSS RATE FROM  │
│ RTCP RR PACKET                    │
└──────────────────────────────────┘
             │
             ▼
┌──────────────────────────────────┐
│ ESTIMATING AVAILABLE TRANSMISSION │
│ RATE BY CALCULATION METHOD THAT   │
│ VARIES ACCORDING TO PACKET LOSS   │
│ RATE                              │
└──────────────────────────────────┘
             │
             ▼
        ┌─────────┐
        │   END   │
        └─────────┘
```

S11 — TRANSMITTING RTP PACKET TO RECEPTION UNIT

S13 — RECEIVING RTCP RR PACKET FROM RECEPTION UNIT

S15 — EXTRACTING PACKET LOSS RATE FROM RTCP RR PACKET

S17 — ESTIMATING AVAILABLE TRANSMISSION RATE BY CALCULATION METHOD THAT VARIES ACCORDING TO PACKET LOSS RATE

# FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2002004841 A1
- US 2003103243 A1

- WO 2004040928 A1

**Non-patent literature cited in the description**

- **D. SISALEM et al.** The Loss-Delay Based Adjustment Algorithm: A TCP-friendly Adaptation Scheme. *Proceedings of NOSSDAV,* 1998